# EUROPEAN PATENT SPECIFICATION

(11) **EP 1 878 073 B1**
(45) Date of publication and mention of the grant of the patent: **27.08.2008**
(21) Application number: 06754877.6
(22) Date of filing: 27.04.2006
(51) Int. Cl.: H01M 2/18, H01M 2/16, B32B 5/02, B32B 7/04, H01M 4/76

(54) **NON-WOVEN GAUNTLETS FOR BATTERIES**
VLIESSTULPEN FÜR BATTERIEN
MANCHETTES NON TISSEES DESTINEES A DES BATTERIES

(30) Priority: 02.05.2005 EP 05103651
(43) Date of publication of application: 16.01.2008
(73) Proprietor: Amer-Sil S.A., 8287 Kehlen (LU)
(72) Inventor: TONIAZZO, Valérie, F-57100 Thionville-Elange (FR); LAMBERT, Urbain, L-8323 Capellen (LU)
(74) Representative: Kihn, Pierre Emile Joseph
(86) International application number: PCT/EP2006/061866
(87) International publication number: WO 2006/117320

(56) References cited:
- EP-A- 0 021 793
- EP-A- 0 377 789
- WO-A-95/08195
- US-A- 4 486 485
- US-A- 5 970 583

## Description

### Background of the invention

The present invention relates to non-woven gauntlets for lead-acid batteries.

Lead acid batteries are widely used and include adjacent positive and negative electrodes immersed in an electrolyte and spaced by separators.

Lead-acid batteries of the tubular type are customarily constructed with tubular positive plates, constituent parts of which include: a grid member having a top bar; a post or burning lug and a plurality of current carrying spines; pencils of active material surrounding the current carrying spines; tubular bodies arranged to support and confine the pencils of active material and maintain such active mass in contact with the current carrying spines; and means for closing ends of the tubes.

The tubular bodies are required to provide a number of functions including: enclosure and support of the active material to maintain the active material in contact with the spines; maintenance of the dimensional stability of the pencils of active material particularly during periods of swelling of the active material; and, finally, provision of adequate communication between the electrolyte and the active material throughout the length of the tubular bodies.

From the early 1950s up to now, the tubular plate has evolved from the single tube design (PVC tubes and woven or braided tubes of C-glass fibers protected first by a perforated plastic armor, then by impregnation with phenolic resin to the more economical and productive multitube gauntlet concept. The first generation of gauntlets, still in use for some applications, were made of woven polyester fabric impregnated with phenolic and then thermoplastic acrylic resin. Since the 1980s, the tubular gauntlet has further evolved to include modern non-woven fabrics.

Up to now the standard (and only) material used by the industry to produce non-woven gauntlets, in which the positive active mass (lead dioxide) is inserted for the production of tubular positive plates of lead-acid batteries is a point-bonded polyester spunbond material, which means that the fabric strength and cohesion is made by melting the PET filament in many points with a hot calendar. The number of points per cm² and the point size depends on the calendar roll. The fabric is impregnated with an acrylic resin in order to protect the PET filaments from chemical attack from the sulphuric acid electrolyte or the oxidative positive active mass (PbO₂).

WO 95/08195 discloses a non-woven, cartridge belt type gauntlet for lead acid batteries comprising two two-layered sheets of spunbond and flat thermobonded, non-woven fabric assembled together at regular intervals wherein the first layer of said sheets comprises a thermoplastic polymer and the second layer consists of non-woven polyolefin fibres.

### Object of the invention

The object of the present invention is therefore to provide a new, non-woven gauntlet with a higher burst strength and a lower electrical resistance.

### General description of the invention

In order to overcome the above-mentioned problems, the present invention proposes a non-woven, cartridge belt type gauntlet for lead acid batteries comprising two sheets of spunbond, needled and flat thermobonded bicomponent PET-PBT nonwoven fabric assembled together at regular intervals.

The fabric used in the present invention is a flat calendared material made of a mixture of PET and PBT filaments, the latter having a lower melting point and being melted during calendaring in order to impart the fabric strength.

Surprisingly, these gauntlets have an electrical resistance of less than 180 mΩ.cm², and a burst pressure of more than 16 bars.

Up to now it was not possible to obtain a non-woven gauntlet having such a high burst pressure and at the same time such a low electrical resistance.

Preferably, the fabric is assembled by sewing, stitching, thermal bonding, ultrasonic bonding, gluing or a combination thereof so as to form the cartridge belt type of gauntlet.

According to a preferred embodiment, the non-woven fabric is impregnated with a thermoplastic resin. The resin is chosen among the group consisting of: acrylic resins like e.g. methyl methacrylate resins or butyl acrylate/methyl acrylate copolymer resins, styrene-butadiene resins, phenolic resins or mixtures thereof. The fabric can be impregnated during the production between the calendaring and the winding steps, or the impregnation can be made off line.

Furthermore, the invention also concerns the use of spunbond, flat calendared bicomponent PET-PBT non-woven fabric for the manufacture of a non-woven, cartridge belt type gauntlet for lead acid batteries comprising two sheets of said fabric stitched together at regular intervals.

Additionally, the invention also concerns lead acid battery of the tubular type, stationary gel batteries and stationary flooded batteries comprising a gauntlet as described above.

### BRIEF DESCRIPTION OF THE FIGURES

The present invention can more fully be understood from the following description taken in conjunction with accompanying figures in which:
Fig. 1 shows the electrical resistance versus -mechanical strength for gauntlets made with different types of non-woven fabric;
Fig. 2 shows the mechanical properties of gauntlets made with different types of non-woven fabrics - Tube expansion as a function of increasing and decreasing internal pressure load;
Fig. 3 represents the hysteresis of tube deformation: difference between tube expansion while increasing internal tube pressure and decreasing internal tube pressure after a load at 10 bars (based on Figure 2);
Fig. 4 shows the elastic properties of gauntlets: tube submitted to 10 successive expansions from 0 to 10 bars (simulation of positive active mass breathing).;
Fig. 5 represents the gauntlets elastic properties : tube diameter changes when internal tube pressure is back to 0 after successive pressure loads up to 10 bars (simulation of positive active mass breathing).

The process to manufacture non-woven (cartridge-belt type) gauntlets consists on joining two strips of polyester non-woven fabric at predetermined intervals with a multi-needles sewing machine, then thermo forming the multitube pannel into the desired tube geometry. The thermoforming is made in an oven by inserting hot rods in-between both fabric layers, between each two adjacent sewing lines.

The fabric has to have the ability to shrink around the rods at the desired temperature (typically between 160 and 200°C) in order to keep the 3 dimensional tube shape and dimensions. The preferred shrinkage is typically around 1.5% at 160°C and 2.5% at 200°C:
- if the shrinkage is higher, the fabric will be too strongly bound around the rods, leading to production problems (low speed, difficulty to push the rods out of the formed tubes...);
- if the shrinkage is lower, the formed tubes will not keep the requested shape, the tube will not be rigid enough and the gauntlets dimensions will not be adequate (width and thickness).

Therefore, beside the initial fabric strip width and sewing pitch, the fabric shrinkage and applied temperature during formation are very important parameters, as they determine the final gauntlet width and tubes diameter. These dimensions are of first importance, as they will fix the final positive plate width and thickness (directly correlated to the amount of active mass entrapped and therefore to the battery capacity) to be inserted in the battery container.

Besides the shrinkage, other fabric characteristics are important for a good final gauntlet quality:
- The tensile strength of the fabric in the machine direction (MD) and cross direction (CD) has to be high enough so that the formed gauntlet resists some internal pressures (burst strength) above 10 bars. The reason is that the gauntlets filling with the positive active mass may be done by injection of a lead oxide paste at moderate, high or very high pressure depending on the filling machine.
- The electrical resistance has to be as low as possible in order to limit the internal resistance of the battery cells.
- The fabric elongation has to be chosen carefully so that the finished gauntlets have good elastic properties. This is of first importance because the positive active mass undergoes volume changes during alternate charges and discharges due to the alternate transformation of PbO₂ into PbSO₄ and vice versa. This phenomenon is known as active mass "breathing". The gauntlet has to limit the active mass expansion and, more importantly, to be elastic enough to perfectly constrain the active mass during contraction and recover its initial tube diameter after contraction. This is the only way to ensure the permanent cohesion of the active mass particles among themselves and around the lead spine and is of first importance to maintain the capacity along the life.

Even if gauntlets made with the current PB1 type fabric (sold e.g. by Johns Manville under the trade name Duraspun^{™} or by Mogul company under the trade name Moped^{™}) improve performance of most of the industrial traction batteries compared to woven gauntlets, they keep some mechanical weaknesses which don't enable battery manufacturers to generalize their use to any type of lead-acid batteries with any type of production tools:
(1) For example, the standard fabrics type PB1 are well suited for moderate pressure of the "Hadi" machines, but are most of the time too weak for the aggressive filling of the "Hoppecke" machines (cf. Table 1 burst strength of gauntlets made with PB1a and PB1b coming from two different suppliers).
(2) Gauntlets made with the standard type PB1 fabrics have enough elasticity to be used in industrial traction flooded batteries. However, their oxidation resistance, mechanical properties and elasticity are more questionable for an utilization in the most demanding applications like stationary gel batteries and stationary flooded batteries due to the longer cycle life requested from these batteries. With fabric type PB1 non-woven gauntlets, the active mass is suspected to be not constraint enough and undergoes density changes and connections loss leading to capacity decay.

Different methods have been tried to reinforce the standard point bonded polyester fabric type PB1 by changing the formulation and production parameters in various ways. The best results were obtained with polyester point-bonded fabric type PB2, which is a modified version of Duraspun^{™} sold by Johns Manville. As mentioned in Table 1, the tensile strength in both directions have been improved.

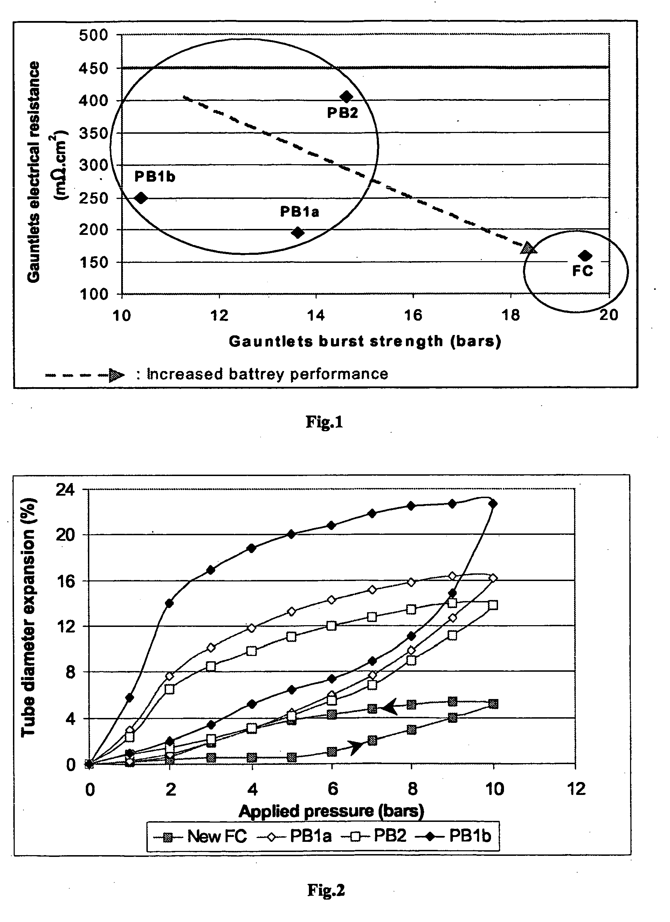

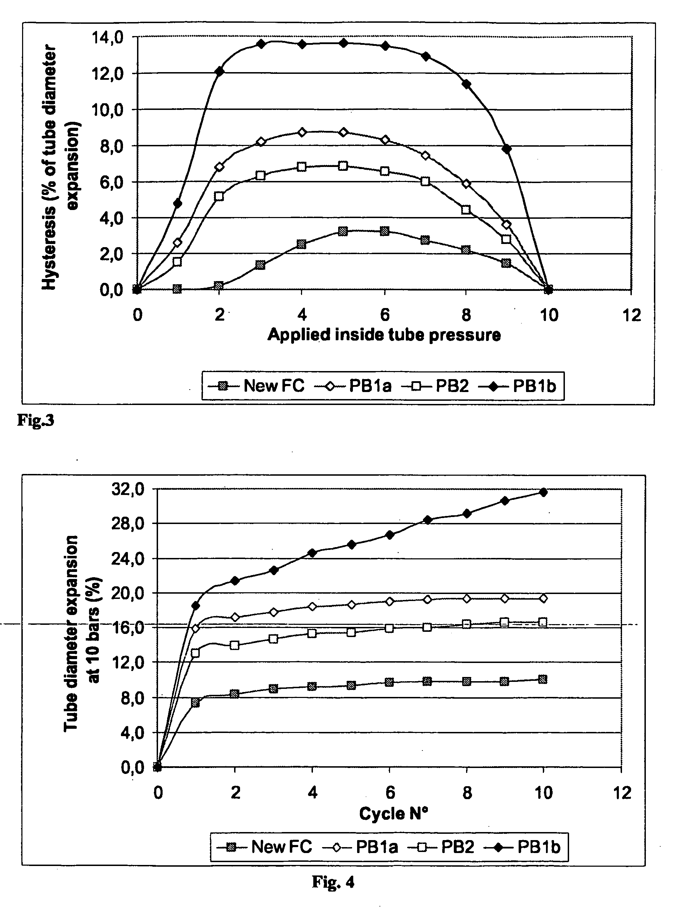

The impact on gauntlets properties was a slight increase of the burst strength (from 13.6 to 14.6 bars) and a slightly better elastic modulus, as illustrated by the testing results on figures 2 to 4.

Unfortunately, however, beside to the improvement of the mechanical properties and elasticity, the electrical resistance has also been increased very much (from 195-250 to 405 mΩ.cm²), which is harmful for the battery electrical performance (Table 1).

**Table 1: physical properties of different types of non-woven polyester fabrics and main properties of resulting non-woven gauntlets.**

| | | | FABRIC TYPE | | | |
|---|---|---|---|---|---|---|
| Fabric properties (typical values) | | | PB1 | | PB2 | New FC |
| Grammage | | g/m2 | 150+/-10 | | 190+/-10 | 190+/-10 |
| Bonding points size | | mm | 0,8 | | 0.8 | None |
| Bonding points per 100 cm2 | | | 1952 | | 1952 | None |
| Filament dtex | | | 4 | | 4 | 4 |
| Tension MD | | N/5cm | 433 | | 552 | 549 |
| Tension CD | | N/5cm | 375 | | 546 | 435 |
| Elongation MD | | % | 28,2 | | 33,9 | 35,8 |
| Elongation CD | | % | 33,7 | | 34,5 | 23,1 |
| Electrical Resistance | | mΩ.m² | 60 | | 160 | 70 |
| Air permeability | | I/m2.s | 1320 | | 600 | 950 |
| Pore volume | | % | 74,6 | | 64.5 | 71,6 |
| Pore size | min | | 19 | | 14 | 17 |
| | mean | µm | 39 | | 38 | 41 |
| | max | | 62 | | 116 | 108 |
| Shrinkage at 160°C | | % | 1,5 | | 1,5 | 0,5 |
| Shrinkage at 200°C | | % | 2,5 | | 2,5 | 1 |

| Gauntlets properties (typical values) | | | PB1 | | PB2 | New FC |
|---|---|---|---|---|---|---|
| | | | PB1a | PB1b | | |
| Burst strength | | bars | 13,6 | 10,4 | 14,6 | 19,5 |
| Electrical Resistance | | mΩ.cm² | 195 | 250 | 405 | 157 |

The gauntlets according to the present invention have been developed with different type of non-woven polyester fabric (referred as New FC in Table 1). The fabric is a mixture of PET (polyethylene terephthalate) and PBT (polybutylene terephtalate) filaments with a higher denier (leading to higher oxidation resistance), which are deposited on a belt using the spunbond technology, and calendared under heat and pressure in between flat rolls. Such fabrics are sold e.g. by Freudenberg Politex under the trade name Terbond^{™} and usually used for roofing applications.

This material has a totally different aspect than the other fabrics used in the manufacture of gauntlets. Furthermore, its physical properties do not look promising compared to the standard PB1 or reinforced PB2 materials :
- the tensile strength and elongation are better than PB1 but lower than PB2, while the electrical resistance, pore volume, air permeability are better than PB2 but lower than PB1.
- Most importantly, the shrinkage of the fabric at 160 and 200°C is much lower than requested, which would lead to the production problems already mentioned earlier.

Nevertheless, in spite of the apparent unsuitability of the fabric for the production of non-woven gauntlets, many efforts have been made to be able to run this fabric onto forming machines.

The oven and pre-oven equipments had to be changed and adapted to the new product requirements. A complete energetic study has been made in order to be able to shrink the fabric around the rods at temperatures adapted to the equipment. The coating of the rods had to be changed for a more resistant one. A very precise recalibration of all the machine parameters had been necessary.

The gauntlets produced with this type of fabric showed surprising results: not only the mechanical strength had been improved very much (from 13.6 - 14.6 bars with the point bonded fabrics to 19.5 bars with the new FC), but the electrical resistance has been reduced at the same time (157 mΩ.cm² only for the gauntlets made with the new FC compared to 195 up to 405 mΩ.cm² with the point-bonded technology). These enhancements in the performance could not have been foreseen from the physical properties of the starting material.

This is the first time that both the mechanical and electrical properties have been improved simultaneously.

The technologic gap is illustrated by Figure 1.

Additionally figures 2 to 5 show the big improvement in the elastic properties of the gauntlets formed with fabric FC compared to any of the point-bonded materials.

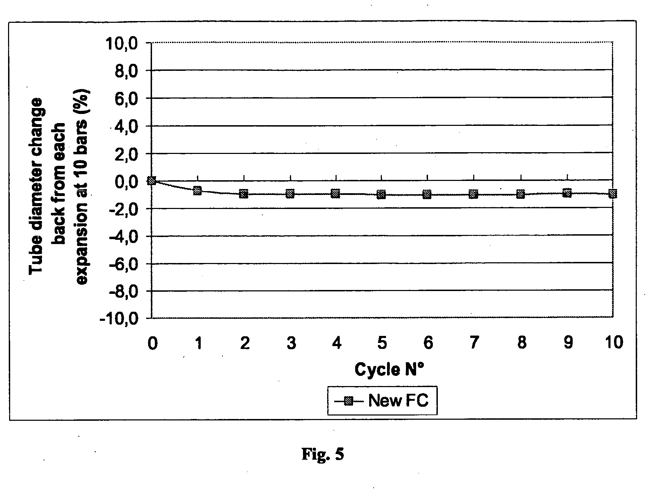

A further surprising effect and a considerable advantage of the gauntlets made with the new FC fabric is the ability to come back to a narrower tube diameter after successive expansions at 10 bars (test results on Figure 5).

This will enable the gauntlet to constrain the positive active mass very efficiently and avoid density changes, connection loss... leading to early capacity decay.

The gauntlets made with the new FC fabric can be used even in very aggressive filling technology due to their very high rigidity, without affecting the electrical properties of the battery because of their reduced electrical resistance.

The improvement of the elastic properties and the higher filament denier render possible their use even in the most demanding applications like stationary gel batteries or stationary flooded batteries. This produce opens thus new markets for non-woven gauntlets.

## Claims

1. Non-woven, cartridge belt type gauntlet for lead acid batteries comprising two sheets of spunbond, needled and flat thermobonded, bicomponent PET-PBT, non-woven fabric, assembled together at regular intervals.

2. Gauntlet for lead acid batteries according to claims 1, wherein the fabric is assembled by sewing, stitching, thermal bonding, ultrasonic bonding, gluing or a combination thereof.

3. Gauntlet for lead acid batteries according to claim 1 or 2, wherein the fabric is impregnated with a thermoplastic resin.

4. Gauntlet for lead acid batteries according to claim 3, wherein the thermoplastic resin is chosen among the group consisting of acrylic resins like e.g. methyl methacrylate resins or butyl acrylate/methyl acrylate copolymer resins, styrene-butadiene resins, phenolic resins or mixtures thereof.

5. Gauntlet for lead acid batteries according to any of the claims 1 to 4, wherein said gauntlet has
• an electrical resistance of less than 180 mΩ.cm² and
• a burst strength of more than 16 bars.

6. Lead acid battery of the tubular type comprising a gauntlet according to any of the claims 1 to 5.

7. Stationary gel battery comprising a gauntlet according to any of the claims 1 to 5.

8. Stationary flooded battery comprising a gauntlet according to any of the claims 1 to 5.

9. Use of spunbond, needled and flat calendared thermobonded bicomponent PET-PBT non-woven fabric for the manufacture of a non-woven, cartridge belt type gauntlet for lead acid batteries comprising two sheets of said fabric assembled together at regular intervals.

## Patentansprüche

1. Vliesröhrentasche vom Patronengurttyp für Blei-Säure-Batterien, die zwei Folien aus spinngebundenem, vernadeltem und flachthermoverfestigtem Bikomponenten-PET-PBT-Vliesstoff umfasst, die in regelmäßigen Abständen zusammengefügt sind

2. Röhrentasche für Blei-Säure-Batterien nach Anspruch 1, wobei der Stoff durch Nähen, Steppen, thermisches Bondieren, Ultraschallbondieren, Kleben oder eine Kombination davon zusammengefügt wird

3. Röhrentasche für Blei-Säure-Batterien nach Anspruch 1 oder 2, wobei der Stoff mit einem thermoplastischen Harz imprägniert wird.

4. Röhrentasche für Blei-Säure-Batterien nach Anspruch 3, wobei das thermoplastische Harz aus der Gruppe gewählt wird, die aus Acrylharzen wie z.B Methylmethacrylatharzen oder Butylacrylat/Methylacrylat-Copolymerharzen, Styrol-Butadien-Harzen, Phenolharzen oder Mischungen davon besteht

5. Röhrentasche für Blei-Säure-Batterien nach einem der Ansprüche 1 bis 4, wobei die Röhrentasche Folgendes aufweist:
• einen elektrischen Widerstand von kleiner als 180 mΩ.cm² und
• einen Berstdruck von größer als 16 bar

6. Blei-Säure-Batterie vom röhrenförmigen Typ, die eine Röhrentasche nach einem der Ansprüche 1 bis 5 umfasst.

7. Stationäre Gelbatterie, die eine Röhrentasche nach einem der Ansprüche 1 bis 5 umfasst.

8. Stationäre Flüssigbatterie, die eine Röhrentasche nach einem der Ansprüche 1 bis 5 umfasst.

9. Verwendung eines spinngebundenen, vernadelten und flachkalandrierten thermoverfestigten Bikomponenten-PET-PBT-Vliesstoffes zur Herstellung einer Vliesröhrentasche vom Patronengurttyp für Blei-Säure-Batterien, die zwei Folien des Stoffes umfasst, die in regelmäßigen Abständen zusammengefügt sind

## Revendications

1. Gaine non-tissée de type cartouchière pour piles au plomb-acide comprenant deux feuilles d'une étoffe non tissée à deux composants PET-PBT filée-liée, aiguilletée et thermoliée assemblées ensemble à intervalles réguliers.

2. Gaine pour piles au plomb-acide selon la revendication 1, dans laquelle l'étoffe est assemblée par couture, piqûre, thermoliage, liage aux ultrasons, collage ou une combinaison de ceux-ci.

3. Gaine pour piles au plomb-acide selon la revendication 1 ou 2, dans laquelle l'étoffe est imprégnée avec une résine thermoplastique.

4. Gaine pour piles au plomb-acide selon la revendication 3, dans laquelle la résine thermoplastique est choisie parmi le groupe consistant en des résines acryliques telles que par exemple des résines de méthacrylate de méthyle ou des résines de copolymère acrylate de butyle/acrylate de méthyle, des résines de styrène-butadiène, des résines phénoliques ou des mélanges de celles-ci

5. Gaine pour piles au plomb-acide selon l'une quelconque des revendications 1 à 4, dans laquelle ladite gaine a
• une résistance électrique inférieure à 180 mΩ.cm² et
• une pression de rupture supérieure à 16 bars

6. Pile au plomb-acide du type tubulaire comprenant une gaine selon l'une quelconque des revendications 1 à 5.

7. Pile sèche fixe comprenant une gaine selon l'une quelconque des revendications 1 à 5

8. Pile ouverte fixe comprenant une gaine selon l'une quelconque des revendications 1 à 5

9. Utilisation d'une étoffe non tissée à deux composants PET-PBT filée-liée, aiguilletée et thermoliée par calandrage à plat pour la fabrication d'une gaine non-tissée de type cartouchière pour piles au plomb-acide comprenant deux feuilles de ladite étoffe assemblées ensemble à intervalles réguliers
